# EUROPÄISCHE PATENTSCHRIFT

(11) **EP 4 057 819 B1**
(45) Veröffentlichungstag und Bekanntmachung des Hinweises auf die Patenterteilung: **11.12.2024**
(21) Anmeldenummer: 20810880.3
(22) Anmeldetag: 13.11.2020
(51) Int. Cl.: A01N 53/00, A01N 25/04, A01N 25/28, A01P 7/04

(54) **KOMBINATION VON VERKAPSELTEM PHENOTHRIN UND EMULGIERTEM PRALLETHRIN**
COMBINATION OF ENCAPSULATED PHENOTHRIN AND EMULSIFIED PRALLETHRIN
COMBINASION DE LA PHÉNOTHRIN ENCAPSULÉE ET DE LA PRALLETHRIN ÉMULSIFIÉE

(30) Priorität: 13.11.2019 AT 509722019
(43) Veröffentlichungstag der Anmeldung: 21.09.2022
(73) Patentinhaber: JESMOND HOLDING AG, 6300 Zug (CH)
(72) Erfinder: GIMENO SIERRA, Miguel, 2560 Berndorf (AT); LUBURA, Borjana, 1030 Wien (AT)
(74) Vertreter: Müllner, Martin
(86) Internationale Anmeldenummer: PCT/EP2020/082164
(87) Internationale Veröffentlichungsnummer: WO 2021/094598

(56) Entgegenhaltungen:
- EP-A1- 0 238 184
- EP-A2- 0 368 285
- WO-A1-2012/028583
- WO-A1-2014/009269
- WO-A1-2020/256881
- WO-A1-97/06688
- MATSUO NORITADA: "Discovery and development of pyrethroid insecticides", PROCEEDINGS OF THE JAPAN ACADEMY. SERIES B, PHYSICAL AND BIOLOGICAL SCIENCES, vol. 95, no. 7, 31 July 2019 (2019-07-31), JP, pages 378 - 400, XP055776791, ISSN: 0386-2208, Retrieved from the Internet <URL:https://www.ncbi.nlm.nih.gov/pmc/articles/PMC6766454/pdf/pjab-95-378.pdf> DOI: 10.2183/pjab.95.027

## Beschreibung

### Technisches Gebiet

Die vorliegende Erfindung betrifft eine neue Formulierung auf Wasserbasis, umfassend zwei Wirkstoffe, nämlich Phenothrin und Prallethrin.

### Stand der Technik

Derzeit auf dem Markt befindliche Produkte haben die Form einer Emulsion in Wasser, oder sie liegen in Form eines emulgierbaren Konzentrats vor, welches zur Verwendung in Aerosolen bestimmt ist, oder als verwendungsfertige Lösung der Wirkstoffe.

Folgende Produktkombinationen sind erhältlich:
d-trans-Tetramethrin 0.25% / d-Phenothrin 0.125%;
d-trans-Tetramethrin 0.20% / d-Phenothrin 0.1% / PBO 0.90%;
d-trans-Tetramethrin 0.33% / d-Phenothrin 0.13%).

All diese Produkte haben Schwächen, wie:
geringe Restwirkung;
hohe Toxizität;
hohe Belastung für Menschen;
höhere Konzentration der Wirkstoffe;
vollständige Verfügbarkeit des Produkts bei der Anwendung, was zu Überdosierung führt;
keine Beeinflussung der biologischen Abbaubarkeit der Wirkstoffe;
hohe Konzentration aromatischer/aliphatischer Lösungsmittel;
kein UV-Schutz;
Empfindlichkeit gegenüber organischen Stoffen in der Umwelt;
verfärbend und nicht geruchslos.

### Phenothrin

(3-Phenoxyphenyl)-methyl-(1R)-cis-trans-2,2-dimethyl-3-(2-methyl-1-propenyl)-cyclop ropancarboxylat) gehört zu Typ 1 synthetischen Pyrethroiden der ersten Generation.

Die Struktur ist wie folgt:

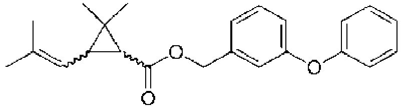

Es wirkt auf die Membran der Nervenzellen bei Kontakt oder Aufnahme und blockiert so das Schließen der Ionen-Gates der Natrium-Kanäle während der Repolarisation. Dies unterbricht die Übertragung von Nervenimpulsen. Bei niedriger Konzentration leidet das Insekt an Hyperaktivität, während es bei hoher Konzentration paralysiert wird und stirbt.

Phenothrin, welches erstmals 1976 von EPA (EPA = United States Environmental Protection Agency) registriert wurde, ist als anwendungsfertiger (ready-to-use, RTU) Innenraum-Spray und als Teppichpulver erhältlich, weiters als unter Druck stehendes Konzentrat, als emulgierbares Konzentrat, und formuliert zur Verwendung als Spot-on oder Stripe-on gegen Floh- und Zeckenbefall für Haustiere. Formulierungen für Haustiere enthalten oft weitere Wirkstoffe zusätzlich zu Phenothrin. Phenothrin wird auch formuliert zur Verwendung mit ULV-Sprühgeräten (ULV = ultra-low volume, geringstmögliche Ausbringmenge) und Innenraum-Vernebelungsgeräten. Es ist instabil gegenüber Sonnenlicht, was die Restwirkung reduziert und somit die Schutzdauer verkürzt.

### Prallethrin

(2-Methyl-4-oxo-3-prop-2-in-1-yl-cyclopent-2-en-1-yl-2, 2-dimethyl-3-(2-methylprop-1-en-1-yl)-cyclopropancarboxylat) gehört zu den Typ 2 Pyrethroiden. Es ist ein Pyrethroid, das die Eigenschaft einer raschen Sofortwirkung (Knock-down-Effekt) bei Haushalts-Schadinsekten zeigt. Die Struktur ist wie folgt:

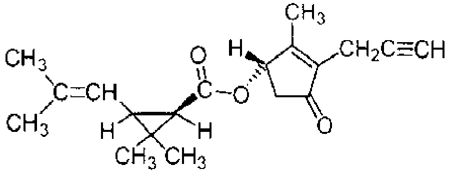

Die wichtigsten erhältlichen Formulierungsarten sind Verdampferplättchen ("Gelsenstecker") und Flüssigkeitszerstäuber.

Es gibt Produkte auf dem Marke, die Phenothrin und Prallethrin enthalten. Diese geben aber keine Restwirkung an, woraus man zwingend schließen kann, dass sie auch keine Restwirkung haben, denn eine Restwirkung ist sehr erwünscht. Im Folgenden eine Liste von Produkten, die Phenothrin und Prallethrin enthalten, recherchiert in der EPA-Datenbank:
- DUET^{™} Dual-action (EPA Reg. No.: 1021-1795-8329)
- Raid Flying insect (EPA Reg. No. 4822-569)
- Raid Multi insect (EPA Reg. No. 4822-569)
Keines dieser Produkte hat eine Restwirkung.

Aus US 2015237861 A ist eine Formulierung bekannt, die Tetramethrin, d-Phenothrin and Piperonyl-butoxid enthält (siehe Tabelle 2). Diese Formulierung zeigte jedoch bereits sieben Tagen nach der Anwendung eine unzureichende Restwirkung, wie in Tabelle 4 dieser Schrift angeführt. In Beispiel 2C dieser Schrift ist eine Formulierung angegeben, die Tetramethrin und d-Phenothrin enthält, die jedoch auch einen deutlichen Abfall der Wirksamkeit innerhalb von drei Monaten zeigte.

Ein Herstellung von Mikrokapseln ist in : US 8216598 von GAT Microencapsulation AG beschrieben. Die Mikrokapseln können hergestellt werden durch eine Emulsionspolymerisation *in situ,* wobei Glycoluril-Polyuera-Mikrokapseln erzeugt werden.

### Darstellung der Erfindung

Aufgabe der Erfindung ist es, eine Formulierung zu finden, um die beiden Wirkstoffe Phenothrin und Prallethrin optimal wirken zu lassen.

Erfindungsgemäß handelt es sich bei der neuen Formulierung um eine Suspension von verkapseltem Phenothrin und eine Emulsion von Prallethrin.

Man kann die erfindungsgemäße Formulierung also als Anwendung des oben erwähnten Patents in US 8216598 B verstehen, um ein umweltfreundlicheres Produkt zu erhalten, welches eine bessere Wirksamkeit, eine verlängerte Restwirkung und ein verbessertes toxikologisches Profil aufweist.

Bei dieser Formulierung erfolgt die Freisetzung von Phenothrin in kontrollierter Weise, sodass eine hohe Beständigkeit der Wirkung bei der Bekämpfung verschiedener kriechender und fliegender Schadinsekten, z.B. schwarzer Ameisen, Feuerameisen, Termiten, Silberfischchen, Wanzen, Deutschen Schaben, Amerikanischen Großschaben, gemeiner Stubenfliegen, Spinnen, Mücken, Stechmücken, Moskitos, gegeben ist.

Gegenwärtig gibt es kein Produkt zur Insektenbekämpfung, wo zwei Wirkstoffe, nämlich mikroverkapseltes Phenothrin mit langer Restwirkung und emulgiertes Prallethrin in Wasser mit Sofortwirkung in einer ZW-Formulierung kombiniert sind. (ZW ist eine Mischformulierung aus CS (capsule suspension, Kapselsuspension) und EW (emulsion, oil in water, Öl in Wasser-Suspension.) Die ähnlichsten bisher vermarkteten Produkte sind von EPA registriert und bestehen aus Phenothrin in freier (nicht mikroverkapselter) Form und Prallethrin in Form einer Emulsion, enthalten aber auch PBO als zusätzliche Komponente. Daher hat das erfindungsgemäße Produkt einen erheblichen Vorteil: das erfindungsgemäße Produkt hat überraschender Weise eine Restwirkung von zumindest acht Wochen, ja sogar bis zu zwölf Wochen, was sich aus dem Stand der Technik nicht ableiten lässt. Studien haben gezeigt, dass das erfindungsgemäße Produkt auch nach drei Monaten eine vollständige Sterblichkeit bewirkt, getestet in *Musca domestica* und *Blattella germanica.*

Das Mengenverhältnis (Massenverhältnis) von Phenothrin zu Prallethrin liegt vorzugsweise zwischen 5:1 und 20:1 und beträgt insbesondere 10:1.

Besonders bevorzugt ist, dass das Phenothrin mikroverkapselt ist, wobei die spezifische Teilchengröße am besten zwischen 1,8 µm und 3,3 µm liegt. Die Teilchengröße wird als volumengewichtetes Mittel über Laserbeugung bestimmt.

Es stellte sich heraus, dass diese Kombination eine Wirkdauer von zumindest acht Wochen hat, insbesondere wenn das Mengenverhältnis nahe dem optimalen Mengenverhältnis von Phenothrin zu Prallethrin von 10:1 liegt. Oft bleibt die tödliche Wirkung zumindest zwölf Wochen vollständig erhalten und nimmt erst nach sechzehn Wochen ab. Dennoch ist die Toxizität für Menschen und andere Warmblütler gering, wozu die Mikroverkapselung einen wesentlichen Beitrag liefert. Auch die inhalative Toxizität ist wegen der Mikroverkapselung gering.

Durch Co-Formulierung mit UV-Stabilisatoren kann auch die UV-Stabilität gewährleistet werden, sodass die lange Wirkdauer auch an sonnenexponierten Stellen gewährleistet ist. Ein geeigneter UV-Stabilisator ist Es calo 551.

Durch die Mikroverkapselung kann die zeitliche Freisetzungscharakteristik optimal eingestellt werden. Man kann daher im Vergleich zu bekannten Produkten mit geringeren Wirkstoffmengen arbeiten.

Demzufolge kann ein Konzentrat etwa 10 Masse-% Phenothrin und etwa 1 Masse-% Prallethrin enthalten. Dieses Konzentrat wird 1:99 mit Wasser verdünnt, um das anwendungsfertige Endprodukt zu erhalten. Dieses Endprodukt enthält dann etwa 0,1 Masse-% Phenothrin und 0,01 Masse-% Prallethrin. Dieses Endprodukt eignet sich hervorragend als Insektizid. Wie im Folgenden noch bewiesen wird, sind die optimalen Auftragsmengen rund 25 ml/m² auf nicht-porösen Flächen und rund 50 ml/m² auf porösen Flächen. Die Formulierung "Verwendung als Insektizid" in dieser Schrift soll therapeutische Anwendungen ausschließen.

Die Freisetzungsrate wird beeinflusst von der Größe der Mikrokapseln, dem Anteil an Monomeren, Pre-Polymeren und 3D-Vernetzern, sowie auch durch die Wanddicke und die Wandpermeabilität.

Die Lagerstabilität ist hoch, sodass beim Lagern nur ein geringer Wirkstoffabbau stattfindet.

Die Wirkstoffe wurden durch die Freisetzungsraten kompatibel gemacht, und diese sind im Hinblick auf die Wirkprofile so gewählt, dass ein Ausgleich zwischen Wirksamkeit, Toxizität und Stabilität erzielt wird. Mittels dieses Produktes kann man zwei Wirkungen mit einer einzigen Anwendung erreichen, nämlich einen raschen Knock-Down-Effekt (Lähmung der Insekten) und ein sicheres Abtöten.

Die vorliegende Erfindung beschäftigt sich insbesondere mit der Wirksamkeit der beiden Wirkstoffe und verbessert deren inhärente Eigenschaften mittels der Mikroverkapselung und Emulgierung in Wasser, um die Sofortwirkung (Knock-down-Effekt) und die Restwirkung (Depotwirkung) zu verbessern. Die gründlich getestete Formulierung enthält 0,1% Phenothrin und 0,01 % Prallethrin. Diese Formulierung wird als das "Endprodukt" bezeichnet.

Prallethrin in Kombination mit Phenothrin bietet überlegene Leistung bei der Bekämpfung von Haushaltsinsekten.

**Tabelle 1**

| **Phenothrin-Stärken:** | **Prallethrin-Stärken:** |
|---|---|
| Überlegenes Wirksamkeitsprofil | Hervorragende Sofortwirkung |
| Nicht-korrosiv | Wirksam bei sehr niedrigen Mengen |
| Biologisch abbaubar | Biologisch abbaubar |
| Anwendungsvielfalt | Anwendungsvielfalt |
| Günstige Toxizität | Günstige Toxizität |

Es gibt derzeit 198 aktive Zulassungen für Phenothrin-Produkte in den USA.

Die Konzentration von Phenothrin bei den Produkten, die in den USA und in Kanada auf dem Markt sind, liegt im Bereich von 0,096% bei Haustier-Pflegesprays und 1,3% bei Pump-Sprays zur Flohbekämpfung. Die geschätzte Wirkungsdauer ist unter zwei Monaten.

Die wichtigste verfügbare Formulierung ist entweder ölbasiertes oder wasserbasiertes Aerosol. Beide Formulierungsarten sind oft mit Synergisten kombiniert. In dieser Hinsicht werden viele Haushaltsprodukte, die Phenothrin enthalten, in Aerosol-Sprühdosen verkauft, die inerte Treibmittel wie Propan oder Isobutan enthalten, welche sehr leicht entflammbar sind.

Es gibt Produkte, die als anwendungsfertige Innenraum-Zerstäuber oder als Teppichpulver verfügbar sind, als unter Druck stehendes oder emulgierbares Konzentrat. Eine andere Form der Verwendung ist die Floh- und Zeckenbehandlung mit Spot-On oder Stripe-On zusammen mit anderen Wirkstoffen. Schließlich können Phenothrinbasierte Produkte mit ULV-Sprühgeräten und Innenraum-Vernebelungsgeräten verwendet werden.

Die Anwendung von Insektiziden mit Restwirkung auf Oberflächen bleibt eine der kosteneffektivsten und vielseitigsten Methoden zur Bekämpfung von Schadinsekten im städtischen Bereich und im Haushaltsbereich. Die Oberflächen, auf die die Insektizide appliziert werden, variieren stark, meistens sind sie porös. Dies kann die Bioverfügbarkeit der Insektizide negativ beeinflussen. Andere Oberflächen können zusätzlich chemisch reaktiv sein und den Wirkstoff denaturieren, was die Fortdauer der Wirkung beeinträchtigt. Weiters unterliegen Insektizide, die an Außenflächen aufgebracht werden, weiteren ungünstigen Bedingungen, hauptsächlich Photodegradation, was die Fortdauer der Wirkung maßgeblich verringert.

Auf dem Gebiet der Insektenbekämpfung ist das Endprodukt eine neuartige Kombination der langsamen bis mittleren Freisetzungscharakteristik, wobei die Freisetzungsrate konstant bleibt, bis der Wirkstoff der Kapsel erschöpft ist.

Sobald die phenothrinhaltigen Mikrokapseln in Kontakt mit einem Insekt kommen, diffundiert der Wirkstoff rasch in die lipophile Kutikula des Insekts. Aufgrund dieser Tatsache können das Verhalten und die biologischen Eigenschaften von Phenothrin durch die Mikroverkapselung verändert werden.

Die mikroverkapselte Formulierung schützt das Phenothrin, um den möglichen Abbau durch Sonnenlicht zu verringern. Es wird periodisch freigesetzt, wodurch sich eine Retardformulierung ergibt. Diese Tatsache bewirkt eine bessere Wirkung, weil der Wirkstoff mit einer konstanten und verlängerten Freisetzungsrate verfügbar ist.

Somit ist das Endprodukt ein anspruchsvolles, doppelwirkendes Haushaltsinsektizid. Es kombiniert eine erwiesene Wirksamkeit von mikroverkapseltem Phenothrin mit einer außergewöhnlichen Sofortwirkung von Prallethrin. Deswegen beginnt das Endprodukt sofort zu wirken.

Zusammen bieten die Wirkstoffe einen überlegenen Bekämpfungsmechanismus, weil die beste Wirkung von jedem Wirkstoff ausgenützt wird, um ein Insektizid zu schaffen, das einzigartige Ergebnisse erzielt und sowohl die Wirksamkeit bei der Insektenbekämpfung als auch die Sicherheit des Anwenders erhöht.

Zusammengefasst wurde das Endprodukt unter Verwendung der Mikroverkapselungstechnik formuliert, um ein Produkt zu schaffen, das spezifisch für den städtischen Bereich und den Haushaltsbereich bestimmt ist und folgendes Profil aufweist:
- hochwirksame Wirkstoffe
- Beständigkeit der Wirkung auf vielen Oberflächen, einschließlich stark poröser Oberflächen und chemisch reaktiver Oberflächen;
- schnelle Sofortwirkung (Knock-down-Wirkung) und Tötung.

Zusätzlich bietet das Endprodukt mehrere signifikante Verbesserungen in Bezug auf Umweltsicherheit und Anwendersicherheit, die sich aus der Mikroverkapselung ergeben.

Das Endprodukt kann weiters folgende Merkmale haben:
- Anhaltende Formulierung mit Antioxidantien, UV-Beständigkeit infolge der Mikroverkapselung;
- sofortige und zeitlich gesteuerte Freisetzung, die zumindest acht Wochen anhält, was wissenschaftlich nachgewiesen ist;
- langsamer Abbau, sodass es nur selten aufgebracht werden muss, um die tödliche Dosis aufrechtzuhalten.

### Bester Weg zur Ausführung der Erfindung

### Beispiele für erfindungsgemäße Formulierungen

Im Folgenden wird erklärt, wie die Mikrokapseln und die Emulsion zusammengesetzt sind, die für die Herstellung des Endprodukts notwendig sind. Folgende Komponenten sind enthalten:

**Tabelle 2**

| | Komponente | CAS-Nummer | Funktion |
|---|---|---|---|
| A | 1R-trans-Phenothrin TG (typisch 91.5% rein) | 26046-85-5 | Wirkstoff |
| B | Prallethrin TG (typisch 93% rein) | 23031-36-9 | Wirkstoff |
| C | BrijO20 | 9004-98-2 | Emulgator |
| D | Break Thru AF5503 | see SDS | Entschäumer |
| E | Cycat 4040 | 67-63-0 | Katalysator |
| F | Propylenglycol | 57-556 | Frostschutz |
| G | TMXDI | 2778-41-8 | Wandbildendes Material |
| H | ONGRONAT 2100 | 2778-41-8 | Wandbildendes Material |
| I | CYMEL 1170 | 68036-98-6 | Vernetzer |
| J | Proxel GXL | 2634-33-5 | Konservierungsstoff |
| K | Radia 7117 | 61788-59-8 | Lösungsmittel |
| L | Synperonic PE/F 127 | 9003-11-6 | Emulgator |
| M | Xanthan Gum | 11138-66-2 | Viskositätseinsteller |
| N | Zephrym PD3315 | see SDS | Dispersionsmittel/Kris tallwachstumsinhibitor |
| O | Wasser | 7732-18-5 | Lösungsmittel |

Bei den folgenden fünf Beispielen wurden jeweils folgende Anteile in Gew.-% der Komponenten A bis O verwendet:

**Tabelle 3**

| | 1 | 2 | 3 | 4 | 5 |
|---|---|---|---|---|---|
| A | 10,644 (technisch) 9,74 (rein) | 10,644 (technisch) 9,74 (rein) | 10,644 (technisch) 9,74 (rein) | 10,644 (technisch) 9,74 (rein) | 10,644 (technisch) 9,74 (rein) |
| B | 1,07 (technisch) 0,9951 (rein) | 1,07 (technisch) 0,9951 (rein) | 1,07 (technisch) 0,9951 (rein) | 1,07 (technisch) 0,9951 (rein) | 1,07 (technisch) 0,9951 (rein) |
| C | 0,0187 | 0,0187 | 0,0187 | 0,0187 | 0,0187 |
| D | 0,015 | 0,015 | 0,015 | 0,015 | 0,015 |
| E | 0,15 | 0,15 | 0,18 | 0,25 | 0,25 |
| F | 5,00 | 8,00 | 7,50 | 9,00 | 10,00 |
| G | 0,15 | 0,15 | 0,3 | 0,4 | 0,10 |
| H | 1,00 | 1,05 | 1,40 | 1,50 | 0,80 |
| I | 0,10 | 0,10 | 0,25 | 0,30 | 0,18 |
| J | 0,10 | 0,10 | 0,10 | 0,10 | 0,10 |
| K | 4,80 | 4,50 | 5,0 | 6,00 | 8,00 |
| L | 0,50 | 0,75 | 0,84 | 0,92 | 0,84 |
| M | 0,40 | 0,40 | 0,35 | 0,30 | 0,30 |
| N | 3,0 | 3,35 | 3,0 | 3,35 | 2,80 |
| O | 73,0523 | 69,7023 | 69,3323 | 66,1323 | 64,8823 |

### Beispiel 1

### Herstellung der Kapselsuspension (CS)

Für 5 kg Endprodukt werden 1670 g CS benötigt. Alle Angaben in Gew.-%.

**Tabelle 4**

| Ölphase | Gew.-% | Wasserphase | Gew.-% |
|---|---|---|---|
| 1R-trans Phenothrin | 31,932 | Synperonic PE/F 127 | 1,5 |
| TMXDI | 0,450 | BrijO20 | 0,056 |
| ONGRONAT 2100 | 3,000 | Zephrym PD3315 | 3,0 |
| Cymel 1170 | 0,300 | Wasser | 44,912 |
| Radia 7117 | 14,400 | Cycat 4040 | 0,45 |

Man halte die Wasserphase und die Ölphase vor dem Emulsionsprozess in einem 2-Liter-Mantelreaktor bei 40°C.

In einen 2-Liter-Mantelreaktor, der mit einem Cawless-Mixer und einem High-Shear-Mixer ausgestattet ist, wird die Wasserphase bei 40°C hinzugefügt. Während der Cawless-Mixer mit 1600 U/min eingeschaltet ist, wird die Ölphase sehr schnell (~ 1 Minute) zu der Wasserphase gegeben, wodurch der Emulsionspolymerisationsprozess gestartet wird.

Nachdem die gesamte Ölphase vollständig emulgiert ist, wird der High-Shear-Mixer mit 4600 U/min eingeschaltet. Die Emulsionspolymerisation ist nach 4 Minuten beendet.

Danach wird die Kapselsuspension bei 60°C in den anderen ummantelten Reaktor, der nur mit einem Ankerrührer mit 36 U/min ausgestattet ist, transferiert.

Die Kapselsuspension wird unter Rühren 3 Stunden bei 60°C gehalten, bis die Kapseln ausgehärtet und stabil gebildet sind.

### Herstellung der Wasseremulsion (EW)

Für 5 kg Endprodukt werden 3330 g EW benötigt. Alle Angaben in Gew.-%.

**Tabelle 5**

| | |
|---|---|
| Propylenglycol | 7,5 |
| Zephrym PD3315 | 3,0 |
| Xanthan Gum | 0,6 |
| Break Thru AF5503 | 0,0225 |
| Proxel GXL | 0,15 |
| Wasser | 87,1175 |
| Prallethrin TG | 1,61 |

In einen 5-Liter-Mantelreaktor, der mit einem High-Shear-Mixer ausgestattet ist, werden alle Komponenten der EW-Formulierung außer Xanthan Gum und Prallethrin hinzugefügt.

Die Komponenten werden mit dem High-Shear-Mixer mit 1200 U/min gemischt und die Lösung auf 40°C erwärmt.

Nachdem die Temperatur 40°C erreicht hat, wird Xanthan bei 4600 U/min bis zur vollständigen transparenten Gelbildung zugeben.

Schließlich wird technisches Prallethrin, erhitzt auf 40°C, unter Rühren bei 4600 U/min für 4 Minuten zugegeben, wodurch eine homogene stabile Emulsion in Wasser (EW) erhalten wird.

### Herstellung der endgültigen Suspension von Kapseln, die mit dem EW gemischt sind, um eine ZW-Formulierung zu bilden:

In einen 6-Liter-Mantelreaktor werden 1670 g Kapselsuspension mit 3330 g EW unter Verwendung eines Ankerrührwerks bei 36 U/min mindestens 4 Stunden lang gemischt, bis die Suspension ins Gleichgewicht kommt und stabil ist.

Man misst die Partikelgröße der ZW-Formulierung mit einem Laserbeugungsgerät und die Stabilität der Dispersion der Kapseln in hartem Wasser von 342 ppm bei dem Verwendungsverhältnis von 1:99.

### Beispiel 2

### Herstellung der Kapselsuspension (CS)

Für 5 kg Endprodukt werden 1670 g CS benötigt. Alle Angaben in Gew.-%.

**Tabelle 6**

| Ölphase | Gew.-% | Wasserphase | Gew.-% |
|---|---|---|---|
| 1R-trans Phenothrin | 31,932 | Synperonic PE/F 127 | 2,25 |
| TMXDI | 0,450 | BrijO20 | 0,056 |
| ONGRONAT 2100 | 3,150 | Zephrym PD3315 | 3,00 |
| Cymel 1170 | 0,300 | Wasser | 44,912 |
| Radia 7117 | 13,500 | Cycat 4040 | 0,45 |

Die Herstellung erfolgt wie bei Beispiel 1.

### Herstellung der Wasseremulsion (EW)

Für 5 kg Endprodukt werden 3330 g EW benötigt. Alle Angaben in Gew.-%.

**Tabelle 7**

| | |
|---|---|
| Propylenglycol | 12 |
| Zephrym PD3315 | 3,52 |
| Xanthan Gum | 0,6 |
| Break Thru AF5503 | 0,0225 |
| Proxel GXL | 0,15 |
| Wasser | 82,0975 |
| Prallethrin TG | 1,61 |

Die Herstellung der Wasseremulsion und die Herstellung der endgültigen Suspension erfolgen wie bei Beispiel 1.

### Beispiel 3

### Herstellung der Kapselsuspension (CS)

Für 5 kg Endprodukt werden 1670 g CS benötigt. Alle Angaben in Gew.-%.

**Tabelle 8**

| Ölphase | Gew.-% | Wasserphase | Gew.-% |
|---|---|---|---|
| 1R-trans Phenothrin | 31,932 | Synperonic PE/F 127 | 2,52 |
| TMXDI | 0,900 | BrijO20 | 0,056 |
| ONGRONAT 2100 | 4,200 | Zephrym PD3315 | 3,0 |
| Cymel 1170 | 0,75 | Wasser | 41,102 |
| Radia 7117 | 15,00 | Cycat 4040 | 0,54 |

Die Herstellung erfolgt wie bei Beispiel 1.

### Herstellung der Wasseremulsion (EW)

Für 5 kg Endprodukt werden 3330 g EW benötigt. Alle Angaben in Gew.-%.

**Tabelle 9**

| | |
|---|---|
| Propylenglycol | 11,25 |
| Zephrym PD3315 | 3,00 |
| Xanthan Gum | 0,525 |
| Break Thru AF5503 | 0,0225 |
| Proxel GXL | 0,15 |
| Wasser | 83,442 |
| Prallethrin TG | 1,61 |

Die Herstellung der Wasseremulsion und die Herstellung der endgültigen Suspension erfolgen wie bei Beispiel 1.

### Beispiel 4

### Herstellung der Kapselsuspension (CS)

Für 5 kg Endprodukt werden 1670 g CS benötigt. Alle Angaben in Gew.-%.

**Tabelle 10**

| Ölphase | Gew.-% | Wasserphase | Gew.-% |
|---|---|---|---|
| 1R-trans Phenothrin | 31,932 | Synperonic PE/F 127 | 2,76 |
| TMXDI | 1,20 | BrijO20 | 0,056 |
| ONGRONAT 2100 | 4,50 | Zephrym PD3315 | 3,0 |
| Cymel 1170 | 0,90 | Wasser | 36,902 |
| Radia 7117 | 18,00 | Cycat 4040 | 0,75 |

Die Herstellung erfolgt wie bei Beispiel 1.

### Herstellung der Wasseremulsion (EW)

Für 5 kg Endprodukt werden 3330 g EW benötigt. Alle Angaben in Gew.-%.

**Tabelle 11**

| | |
|---|---|
| Propylenglycol | 13,5 |
| Zephrym PD3315 | 3,52 |
| Xanthan Gum | 0,45 |
| Break Thru AF5503 | 0,0225 |
| Proxel GXL | 0,15 |
| Wasser | 80,7475 |
| Prallethrin TG | 1,61 |

Die Herstellung der Wasseremulsion und die Herstellung der endgültigen Suspension erfolgen wie bei Beispiel 1.

### Beispiel 5

### Herstellung der Kapselsuspension (CS)

Für 5 kg Endprodukt werden 1670 g CS benötigt. Alle Angaben in Gew.-%.

**Tabelle 12**

| Ölphase | Gew.-% | Wasserphase | Gew.-% |
|---|---|---|---|
| 1R-trans Phenothrin | 31,932 | Synperonic PE/F 127 | 2,52 |
| TMXDI | 0,30 | BrijO20 | 0,056 |
| ONGRONAT 2100 | 2,40 | Zephrym PD3315 | 3,000 |
| Cymel 1170 | 0,54 | Wasser | 34,502 |
| Radia 7117 | 24,00 | Cycat 4040 | 0,75 |

Die Herstellung erfolgt wie bei Beispiel 1.

### Herstellung der Wasseremulsion (EW)

Für 5 kg Endprodukt werden 3330 g EW benötigt. Alle Angaben in Gew.-%.

**Tabelle 13**

| | |
|---|---|
| Propylenglycol | 15,00 |
| Zephrym PD3315 | 2,70 |
| Xanthan Gum | 0,45 |
| Break Thru AF5503 | 0,0225 |
| Proxel GXL | 0,15 |
| Wasser | 80,0675 |
| Prallethrin TG | 1,61 |

Die Herstellung der Wasseremulsion und die Herstellung der endgültigen Suspension erfolgen wie bei Beispiel 1.

### Kritische Parameter für die Mikrokapsel-Auswahl

Die Auswahl der Mikrokapseln für die Stabilitäts- und Wirksamkeitsstudien basiert auf den angestrebten Eigenschaften für das Endprodukt.

Die wichtigste Eigenschaft ist die Freisetzungsrate der Mikrokapseln, die hauptsächlich gesteuert wird durch:
1. Mikrokapselgröße in µm
2. Vernetzungsgrad (Verhältnis wandbildendes Material zu Vernetzer);
3. Wandstärke (Verhältnis Polymer zu eingekapselter Ölphase);
4. Mobilität der Ölphase als Funktion des Lösungsmittelanteils.

Unter Berücksichtigung aller vier aufgelisteten Eigenschaften können für jedes Beispiel die folgenden Daten angeführt werden:

**Tabelle 14**

| | 1 | 2 | 3 | 4 | 5 |
|---|---|---|---|---|---|
| Teilchengröße | mittel/ hoch | mittel/ hoch | niedrig/ mittel | niedrig/ mittel | mittel/hoch |
| Vernetzungsgrad | hoch | hoch | mittel | mittel | niedrig |
| Wandstärke | niedrig | niedrig | hoch | hoch | niedrig |
| Mobilität der Ölphase | mittel | mittel | mittel | mittel/ hoch | hoch |

Eine mittlere/hohe Teilchengröße bedeutet wenige Teilchen pro Volumen; eine niedrige/mittlere Teilchengröße bedeutet viele Teilchen pro Volumen.

Ein hoher Vernetzungsgrad bedeutet eine niedrige Freisetzungsrate mit einer langen Restwirkung;
ein mittlerer Vernetzungsgrad bedeutet eine schnelle Freisetzung mit einer mittleren Restwirksamkeit;
ein niedriger Vernetzungsgrad bedeutet eine schnelle Freisetzung mit einer geringen Restwirksamkeit.

Eine hohe Wandstärke bedeutet eine mittlere Diffusionsrate;
eine niedrige Wandstärke bedeutet eine hohe Diffusionsrate.

Demnach kann man feststellen, dass in Beispiel 1 und 2 die Anzahl der Teilchen pro Volumen niedrig ist; daher ist die Oberfläche zur Abgabe des Wirkstoffes zu klein, was zu einer niedrigen Wirksamkeit führt. Dieses Beispiel eignet sich daher nicht für weitere Tests.

Bei Beispiel 3 ist die Anzahl der Teilchen pro Volumen hoch, wodurch sich eine größere Oberfläche für die Abgabe des Wirkstoffs ergibt, was eine höhere Wirksamkeit nach sich zieht. Zusätzlich ist die Teilchengrößenverteilung schmal, was eine bessere Dispersionsstabilität zur Folge hat. Das Ausmaß der Vernetzung gibt ein mittleres Freisetzungsprofil mit einem hohen Anteil an wandbildendem Material, was eine mittlere Diffusion zur Folge hat, die eine ausreichende Restwirkung ergibt. Dieses Beispiel wurde für weitere Tests ausgewählt.

Beispiel 4 ist ähnlich wie Beispiel 3, hat aber eine weniger schmale Teilchengrößenverteilung und eine höhere Mobilität; diese Formulierung ist auch akzeptabel, aber nicht so ideal wie die von Beispiel 3.

Bei Beispiel 5 ist die Anzahl der Teilchen pro Volumen mittel bis hoch, es steht eine mittlere Oberfläche für die Abgabe des Wirkstoffs zur Verfügung, mit einer geringen Restwirkung wegen eines zu schnellen Freisetzungsprofils. Daher ist dieses Beispiel nicht für weitere Tests geeignet.

Letztlich wurde Beispiel 3 für weitere Tests (Wirksamkeit, Toxizität) ausgewählt.

### Wirksamkeitsstudien über das Endprodukt ("no choice test")

Das Konzentrat wurde in einem Verhältnis von 1:99 verdünnt, damit es als gebrauchsfertige Formulierung angewendet werden kann.

Für die Beurteilung der Restwirkung dieses Endprodukts im Hinblick auf den Knock-down-Effekt und den Tod wurden erwachsene Insekten unterschiedlichen Geschlechts verwendet.

Nachdem das Produkt vor der Anwendung gut geschüttelt wurde, wurden 100 ml/m² auf Teppich, Beton und Holz aufgebracht, wogegen 50 ml/m² auf keramische Oberflächen aufgebracht wurden. Die Oberflächen waren vor der Verwendung unter Umgebungsbedingungen gelagert. Die insgesamt behandelte Oberfläche war 1 m², um praxisnah zu sein. Eine unbehandelte Kontrolle (es wurde kein Produkt aufgetragen) wurde zu Vergleichszwecken auf die gleiche Weise vorbereitet.

Dies war ein Test, bei dem die Insekten gezwungen waren, auf der jeweiligen Oberfläche zu verbleiben ("no choice test"). Die Kontinuität der Wirkung wurde bestimmt, indem derselbe Test nach vier und nach acht Wochen Lagerung der Platten wiederholt wurde. Die Insekten wurden hinsichtlich folgender Punkte beobachtet:
- Knock-down-Effekt
- Sterblichkeit

Ein ergänzender Versuch wurde durchgeführt, in dem das Endprodukt direkt auf die Insekten gesprüht wurde, wobei der sofortige Knockdown-Effekt und die Sterblichkeit nach 24 h gemessen wurden. In beiden Fällen ergab sich 100%.

Bei den besprühten Flächen ergab sich ein 100%iger Knock-down-Effekt
- am Tag 0 nach 15 min
- nach vier Wochen nach 45 min
- nach acht Wochen nach 60 min

Die Sterblichkeit wurde auf vier unterschiedlichen Flächen (Beton, Holz, Teppich, Keramikfliesen) für folgende Insekten untersucht:
Musca domestica (Stubenfliege)
Aedes aegypti (Gelbfiebermücke)
Culex pipiens (Gemeine Stechmücke)
Anopheles gambiae (Afrikanische Malariamücke)
Blattella germanica (Deutsche Schabe)
Periplaneta americana (Amerikanische Großschabe)
Lasius niger (Schwarze Wegameise)
Ixodes ricinus (Gemeiner Holzbock, eine Schildzecke)
Ctenocephalides felis (Katzenfloh)
Lepisma saccharina (Silberfischchen)
Cimex lectularius (Bettwanze)
Tineola bisselliella (Kleidermotte)
Dermatophagoides pteronyssinus (Hausstaubmilbe)
Tegenaria domestica (Hauswinkelspinne, Kellerspinne)
Pediculus humanus (Kopflaus)

Sowohl am Tag 0 als auch nach acht Wochen betrug die Sterblichkeit 100%.

Somit zeigte sich, dass beim Besprühen von nicht porösen Flächen mit 50 ml/m² sowie beim Besprühen von porösen Flächen mit 100 ml/m²
- eine sehr gute insektizide Wirkung mit einem raschen Knockdown-Effekt und vollständiger Abtötung gegeben ist
- eine Restwirkung gegeben ist, die zumindest acht Wochen nach der Behandlung verschiedener Flächen (Keramikfliesen, Teppiche, Holz und Beton) beträgt.

### Wirksamkeitsstudien über das Endprodukt (simulierte Anwendung) - 8 Wochen

Zusätzliche Tests wurden durchgeführt, bei denen sich die Insekten frei bewegen konnten, was realistischen Bedingungen entspricht.

Der Test wurde in vier 15 m³ großen Testkammern (6 m² Bodenfläche) mit vier Replikaten entsprechend dem Standard BSI 4172 Teile 1 und 2 (1993) betreffend das Testen von Insektiziden in tragbaren Druckdosen durchgeführt. Die Testkammern wurden auf einer Temperatur von 26°C±1°C und einer relativen Feuchtigkeit von 70%±5% während des Testzeitraums gehalten.

Das Material der Testkammern waschbar. An Wand/Decke und am Boden was nicht poröses Material, wie epoxidlackierter Stahl und Keramikfliesen.

Um zu simulieren, was in Räumen geschieht, wurden einige Polystyrolblöcke und Kartons in die Testkammer gegeben, um Verstecke (Zufluchtsorte) zu bilden, sowie Wasser- und Futterquellen mit:
- Wasserquelle (sechs 25 cm lange Wasserphiolen mit Wattestäbchen)
- Nahrungsmittelquelle (vier Stellen am Boden, in den Verstecken, zwei Petrischalen mit Hundekuchen)

Die Insekten konnten die Wasser- und Futterquellen erreichen, ohne in Kontakt mit dem Insektizid zu kommen. Sie konnten sich an vielen Stellen verstecken. Nur die Hälfte der Fläche wurde behandelt, sodass die Zielorganismen die Wahl hatten, mit dem Endprodukt in Kontakt zu kommen oder nicht.

Bei jeder Behandlung und jeder Wiederholung wurden Insekten wie folgt verwendet:
25 jeder Spezies, außer für Kellerspinnen, die schwierig zu finden waren und von denen nur 5 verwendet wurden, pro Replikat, einschließlich der entsprechenden unbehandelten Vergleichsversuche.

Die Vergleichsversuche dienten zur Überprüfung der für die Tests verwendeten Tiere und zum Erkennen von unbeabsichtigten Wirkungen, die durch die Handhabung oder Versuchsbedingungen entstehen könnten.

Die Insekten wurden zwei Stunden nach der Behandlung freigegeben, damit genug Zeit zum Trocknen der Oberflächen vorhanden war.

Die Anwendung wurde unter Verwendung eines professionellen Sprühers GLORIA 81 mit einer Anti-Tropf-Düse durchgeführt. Die Flüssigkeit wurde zwischen den Behandlungen jeweils kräftig geschüttelt.

Die Anwendungsdosierung war 50 ml/m² und die behandelte Fläche war die Hälfte der Testkammer, z.B. 3 m², d.h. es wurden jeweils 150 ml des Produkts auf 3 m² Fläche aufgebracht.

Die Wege zu den Futter- und Wasserquellen wurden nicht behandelt.

Mit folgenden Insekten wurde getestet:
Musca domestica (Stubenfliege)
Aedes aegypti (Gelbfiebermücke)
Culex pipiens (Gemeine Stechmücke)
Anopheles gambiae (Afrikanische Malariamücke)
Blattella germanica (Deutsche Schabe)
Periplaneta americana (Amerikanische Großschabe)
Lasius niger (Schwarze Wegameise)
Solenopsis invicta (Rote Feuerameise)
Reticulitermes santonensis (Gelbfüßige Bodentermite)
Lepisma saccharina (Silberfischchen)
Cimex lectularius (Bettwanze)
Tegenaria domestica (Hauswinkelspinne, Kellerspinne)

Sowohl am Tag 0 als auch nach acht Wochen war die Sterblichkeit 100%.

Unter den Bedingungen dieser Untersuchung (simulierte Anwendung) zeigte das Endprodukt, aufgetragen in einer Menge von 50 ml/m², eine vollständige Vernichtung in weniger als einer Woche, mit einer 100%-Sterblichkeit. Die Restwirkung verblieb über einen Zeitraum von acht Wochen nach der Behandlung konstant.

### Wirksamkeitsstudien über das Endprodukt (simulierte Anwendung) - 12 und 16 Wochen

Zusätzliche Studien wurden durchgeführt, um die Wirksamkeit und Restwirkung des Endprodukts zu bewerten, das zur Bekämpfung verschiedener Insektenschädlinge angewendet wurde.

Der Versuch wurde im Labor in einer Testkammer mit Materialien durchgeführt, die die tatsächlichen Verwendungsbedingungen simulierten (Karton = Versteck/Zufluchtsort + Nahrung / Wasserquelle), und nur die Hälfte der Fläche wurde mit dem Produkt behandelt, so dass die Zielorganismen die Wahl hatten, mit dem Produkt in Kontakt zu kommen oder nicht.

Die Wirksamkeit wurde durch einen Prozentsatz der Bevölkerungsreduktion nach der Behandlung und nach 8 und 12 Wochen quantifiziert.

Die getesteten Dosen betrugen 50 ml/m² für nicht poröse Oberflächen (Keramikfliesen) und 100 ml/m² für poröse Oberflächen (Faserzement).

Die ausgewählten Arten zum Testen waren Musca domestica (Stubenfliege) und Blattella germanica (deutsche Kakerlake).

Das Produkt hat sich bei beiden Zielschädlingen mit einer vollständigen Abtötung (100%) bis zu einer Expositionszeit von 12 Wochen als sehr gut erwiesen.

Ein Test für weitere vier Wochen zeigte, dass die Wirksamkeit bezüglich Musca domestica immer noch vorhanden war, allerdings nur noch gering bezüglich Blattella germanica:

**Tabelle 15**

| | 8 Wochen | 12 Wochen | 16 Wochen |
|---|---|---|---|
| Musca domestica | 100% | 100% | 100% |
| Blattella germanica | 100% | 100% | 17% |

### Toxizitätsstudien über das Endprodukt

Ein Test bezüglich der oralen akuten Toxizität wurde mit Ratten durchgeführt, um festzustellen, ob das Endprodukt bei einer einmaligen oralen Dosis toxisch sein kann. Unter den Bedingungen der Studie war die orale akute LD₅₀-Dosis des Endprodukts größer als 5000 mg/kg Körpergewicht in weiblichen Ratten. Alle Tiere überlebten, legten Körpergewicht zu und schienen aktiv und gesund während der Studie. Damit fällt das Endprodukt in die Kategorie 5 der GHS-Gefahrenklasse, d.h. keinerlei Symbole oder Warnhinweise sind erforderlich.

Ein Test bezüglich der inhalativen akuten Toxizität wurde mit Ratten durchgeführt, um festzustellen, ob das Endprodukt bei einer einmaligen Exposition über die Atmung (nur die Nase war exponiert) toxisch sein kann. Unter den Bedingungen der Studie war LC₅₀ der Testsubstanz größer als 5,03 mg/l, sowohl bei männlichen als auch bei weiblichen Ratten. Somit erfüllt das Endprodukt auch hier die Erfordernisse der Kategorie 5.

Alle Tiere überlebten die Exposition und legten Körpergewicht während der Studie zu. Nach der Exposition zeigten alle Ratten unregelmäßige Atmung, aber alle Tiere erholten sich am Tag 2 und schienen aktiv und gesund für den Rest der zweiwöchigen Beobachtung. Grobe Anomalitäten wurden bei keinem der Tiere beobachtet, wenn sie am Ende des 14tägigen Beobachtungszeitraums seziert wurden.

Die akute dermale Toxizität wurde nicht getestet, weil die letale Dosis bei Ratten bereits für das Konzentrat einen Wert von über 5000 mg/kg ergeben hatte.

### Toxizitätsstudien über das Konzentrat

Analoge Studien für das Konzentrat (10% Phenothrin und 1% Prallethrin) ergaben, dass der LD₅₀-Wert sowohl beim Test der oralen als auch beim Test der dermalen akuten Toxizität größer als 5000 mg/kg Körpergewicht war. Das entspricht der Kategorie 5 der entsprechenden GHS-Gefahrenklasse, d.h. keinerlei Symbole oder Warnhinweise sind erforderlich.

Bei der Studie der akuten oralen Toxizität wurden alle Tiere im Hinblick auf Sterblichkeit, Anzeichen einer groben Vergiftung und Verhaltensänderungen 13 oder 14 Tage lang zumindest einmal täglich beobachtet. Alle Tiere überlebten, legten Körpergewicht zu und schienen aktiv und gesund. Es gab weder Anzeichen einer groben Vergiftung noch negative pharmakologische Effekte oder abnormales Verhalten.

Bei der Studie für akute dermale Toxizität wurden alle Tiere im Hinblick auf Sterblichkeit, Anzeichen einer groben Vergiftung und Verhaltensänderungen 14 Tage lang zumindest einmal täglich beobachtet. Alle Tiere überlebten die Exposition und legten Körpergewicht zu. Grobe Anomalitäten wurden bei keinem der Tiere beobachtet, wenn sie am Ende des 14tägigen Beobachtungszeitraums seziert wurden.

Bei der Studie für die inhalative akute Toxizität erfüllen die Werte die Erfordernisse für die Kategorie 4 der entsprechenden GHS-Gefahrenklasse. Alle Tiere überlebten die Exposition gegenüber der Testatmosphäre. Nach der Exposition zeigten 8 Ratten verminderte Aktivität und außerdem zeigten alle Ratten unregelmäßige Atmung, abnormalen Gang und Zittern. Jedoch erholten sich alle Ratten am Tag 4 und schienen während des verbleibenden 14tägigen Beobachtungszeitraums aktiv und gesund. Obwohl am Tag 1 einige Tiere Körpergewicht verloren oder zumindest nicht zulegten, legten alle Tiere während des 14tägigen Beobachtungszeitraums Gewicht zu. Der beobachtete Gewichtsverlust wurde nicht als toxikologisch bedeutend angesehen. Bei keinem der Tiere wurden grobe Anomalitäten beobachtet, wenn sie nach dem 14tägigen Beobachtungszeitraum seziert wurden.

### Lagerfähigkeit des Endprodukts und des Konzentrats

Es wurden physikalische und chemische Eigenschaften in Übereinstimmung mit den OECD-Grundsätzen der Guten Laborpraxis und den GLP-Grundsätzen des österreichischen Chemikaliengesetzes 1996 bestimmt. Die Studien wurden in 0,375 1 PET-Sprühflaschen als endgültiges Verpackungsmaterial durchgeführt. Typische Parameter wie physikalischer Zustand, Farbe, Geruch, Wirkstoffgehalt, Dichte, pH, Nasssiebrückstand, beständiger Schaum, Teilchengröße, Ausgießbarkeit, Dispersionsstabilität sowie Korrosionseigenschaften wurden bestimmt. Es wurden vier Proben analysiert:
- Neu hergestelltes Produkt
- Produkt nach 4 Frost-/Tauwechseln: jeweils 18 Stunden bei -10±2°C und 6 Stunden bei 20±2°C.
- Produkt nach 7 Tagen bei 0±2°C
- Produkt nach 14 Tagen bei 54±2°C.

Sowohl das Endprodukt als auch das Konzentrat waren bei diesen Proben mit beschleunigter Alterung stabil.

### Bestimmung des anaeroben biologischen Abbaus des Endprodukts

Es wurde der anaerobe biologische Abbau des Endprodukts gemäß OECD 310:2014 bestimmt. Die Proben wurden während der Testperiode (28 Tage) auf einer Temperatur von 20±2°C gehalten.

Da der TIC-Gehalt am Ende der Testperiode geringer als 10% war, kann festgestellt werden, dass kein abiotischer Abbau stattgefunden hat. Gemäß OECD 310:2014 gilt das Endprodukt somit als nicht biologisch abbaubar unter aeroben Bedingungen.

### Bestimmung der wirksamen Dosis auf nicht-porösen Oberflächen

Ziel dieser Studie war die Bewertung verschiedener Dosierungen des Endprodukts auf nicht-porösen Oberflächen hinsichtlich der Bekämpfung von
Musca domestica (gemeine Stubenfliege)
Blattella germanica (Deutsche Schabe) und
Tegenaria domestica (Hauswinkelspinne, Kellerspinne)

Diese Insekten wurden Oberflächen, die mit verschiedenen Dosierungen behandelt waren, nämlich mit 12 ml/m², 25 ml/m² und 35 ml/m², ausgesetzt. Ein Kontrollversuch, bei dem die Oberfläche mit Wasser behandelt wurde, wurde ebenfalls durchgeführt.

Einige keramische Fliesen mit 15 cm x 15 cm wurden mit dem Produkt behandelt und die Insekten wurden eine Stunde lang darauf exponiert. Es wurde die Sterblichkeit in regelmäßigen Intervallen beobachtet.

Folgende Ergebnisse wurden erhalten:
Bei den mit Wasser behandelten Fliesen war die Sterblichkeit unter 5%, was den Versuch valide macht.
Bei den mit 12 ml/m² behandelten Fliesen ergaben sich folgende Prozentsätze an getöteten Insekten:

**Tabelle 16**

| Zeit | 1h | 2h | 3h | 4h | 5h | 6h | 7h | 8h | 24h | 48h | 72h |
|---|---|---|---|---|---|---|---|---|---|---|---|
| Musca domestica | 0 | 0 | 0 | 0 | 0 | 1 | 1 | 5 | 49 | 93 | 100 |
| Blattella germanica | 0 | 0 | 0 | 0 | 0 | 0 | 1 | 1 | 9 | 44 | 44 |
| Tegenaria domestica | 0 | 0 | 0 | 0 | 0 | 0 | 0 | 0 | 15 | 55 | 55 |

Man erkennt, dass diese Dosierung unzureichend ist, weil nach 24 h nicht alle Insekten vernichtet waren.

Bei den mit 25 ml/m² behandelten Fliesen ergaben sich folgende Prozentsätze:

**Tabelle 17**

| Zeit | 1h | 2h | 3h | 4h | 5h | 6h | 7h | 8h | 24h | 48h | 72h |
|---|---|---|---|---|---|---|---|---|---|---|---|
| Musca domestica | 0 | 0 | 0 | 2 | 5 | 8 | 13 | 19 | 100 | 100 | 100 |
| Blattella germanica | 0 | 0 | 0 | 2 | 4 | 13 | 13 | 16 | 100 | 100 | 100 |
| Tegenaria domestica | 0 | 0 | 5 | 5 | 10 | 19 | 19 | 20 | 100 | 100 | 100 |

Hier ist die Dosierung ausreichend: nach 24 Stunden sind alle Insekten vernichtet.

Bei den mit 35 ml/m² behandelten Fliesen ergaben sich folgende Prozentsätze:

**Tabelle 18**

| Zeit | 1h | 2h | 3h | 4h | 5h | 6h | 7h | 8h | 24h | 48h | 72h |
|---|---|---|---|---|---|---|---|---|---|---|---|
| Musca domestica | 0 | 1 | 9 | 17 | 37 | 55 | 100 | 100 | 100 | 100 | 100 |
| Blattella germanica | 0 | 0 | 3 | 6 | 11 | 19 | 24 | 30 | 100 | 100 | 100 |
| Tegenaria domestica | 0 | 5 | 10 | 15 | 20 | 20 | 25 | 45 | 100 | 100 | 100 |

Durch diese Dosissteigerung konnte die Wirkung zusätzlich verbessert werden: die Stubenfliege war bereits nach 7 Stunden vollständig vernichtet, und auch bei den anderen beiden Insektenarten brachte die Dosissteigerung eine Verbesserung.

### Bestimmung der wirksamen Dosis auf porösen Oberflächen

Ziel dieser Studie war die Bewertung verschiedener Dosierungen des Endprodukts auf porösen Oberflächen hinsichtlich der Bekämpfung von
Musca domestica (gemeine Stubenfliege)
Blattella germanica (Deutsche Schabe)

Diese Insekten wurden Beton, der mit verschiedenen Dosierungen behandelt war, nämlich mit 25 ml/m², 35 ml/m² und 50 ml/m², ausgesetzt. Ein Kontrollversuch, bei dem Beton mit Wasser behandelt wurde, wurde ebenfalls durchgeführt.

Es wurde die Sterblichkeit in regelmäßigen Intervallen beobachtet.

Folgende Ergebnisse wurden erhalten:
Bei dem mit Wasser behandelten Beton war die Sterblichkeit unter 5%, was den Versuch valide macht.
Bei den mit 25 ml/m² behandelten Fliesen ergaben sich folgende Prozentsätze:

**Tabelle 19**

| Zeit | 1h | 2h | 3h | 4h | 5h | 6h | 7h | 8h | 24h | 48h | 96h |
|---|---|---|---|---|---|---|---|---|---|---|---|
| Musca domestica | 0 | 0 | 0 | 0 | 0 | 0 | 0 | 0 | 100 | 100 | 100 |
| Blattella germanica | 0 | 0 | 0 | 0 | 0 | 0 | 0 | 0 | 19 | 36 | 77 |

Man erkennt, dass diese Dosierung unzureichend ist, weil nach 24 h nicht alle Insekten vernichtet waren.

Bei den mit 35 ml/m² behandelten Fliesen ergaben sich folgende Prozentsätze:

**Tabelle 20**

| Zeit | 1h | 2h | 3h | 4h | 5h | 6h | 7h | 8h | 24h | 48h | 96h |
|---|---|---|---|---|---|---|---|---|---|---|---|
| Musca domestica | 0 | 0 | 0 | 2 | 9 | 11 | 16 | 23 | 100 | 100 | 100 |
| Blattella germanica | 0 | 0 | 0 | 0 | 0 | 0 | 0 | 0 | 30 | 52 | 93 |

Hier sind nach 24 h zwar mehr Insekten vernichtet, aber auch noch nicht alle. Auch diese Dosierung ist daher unzureichend.

Bei den mit 50 ml/m² behandelten Fliesen ergaben sich folgende Prozentsätze:

**Tabelle 21**

| Zeit | 1h | 2h | 3h | 4h | 5h | 6h | 7h | 8h | 24h | 48h | 96h |
|---|---|---|---|---|---|---|---|---|---|---|---|
| Musca domestica | 0 | 0 | 3 | 11 | 16 | 22 | 28 | 47 | 100 | 100 | 100 |
| Blattella germanica | 0 | 0 | 0 | 0 | 5 | 8 | 12 | 17 | 100 | 100 | 100 |

Hier ist die Dosierung ausreichend: nach 24 Stunden sind alle Insekten vernichtet.

## Patentansprüche

1. Kombination von verkapseltem Phenothrin und emulgiertem Prallethrin in Wasser.

2. Kombination nach Anspruch 1, **dadurch gekennzeichnet, dass** das Masseverhältnis von Phenothrin zu Prallethrin zwischen 5:1 und 20:1 liegt und vorzugsweise 10:1 beträgt.

3. Kombination nach Anspruch 1 oder 2, **dadurch gekennzeichnet, dass** das Phenothrin mikroverkapselt ist.

4. Kombination nach Anspruch 3, **dadurch gekennzeichnet, dass** die spezifische Teilchengröße von Phenothrin zwischen 1,8 µm und 3,3 µm liegt.

5. Kombination nach einem der Ansprüche 1 bis 4, **dadurch gekennzeichnet, dass** sie mit einem UV-Stabilisator co-formuliert ist.

6. Kombination nach einem der Ansprüche 1 bis 5, **dadurch gekennzeichnet, dass** die Konzentration von Phenothrin 9-11 Masse-% und die Konzentration von Prallethrin 0,9-1,1 Masse-% beträgt.

7. Kombination nach einem der Ansprüche 1 bis 5, **dadurch gekennzeichnet, dass** die Konzentration von Phenothrin 0,09-0,11 Masse-% und die Konzentration von Prallethrin 0,009-0,011 Masse-% beträgt.

8. Nicht-therapeutische Verwendung der Kombination nach Anspruch 7 als Insektizid.

9. Nicht-therapeutische Verwendung des Insektizids nach Anspruch 8 in einer Konzentration von 20 ml/m² bis 60 ml/m² auf nicht-porösen Flächen.

10. Nicht-therapeutische Verwendung des Insektizids nach Anspruch 8 in einer Konzentration von 40 ml/m² bis 120 ml/m² auf porösen Flächen.

## Claims

1. A combination of encapsulated phenothrin and emulsified prallethrin in water.

2. The combination according to claim 1, **characterised in that** the mass ratio of phenothrin to prallethrin is between 5:1 and 20:1 and is preferably 10:1.

3. The combination according to claim 1 or 2, **characterised in that** the phenothrin is microencapsulated.

4. The combination according to claim 3, **characterised in that** the specific particle size of phenothrin is between 1.8 µm and 3.3 µm.

5. The combination according to any of claims 1 to 4, **characterised in that** it is co-formulated with a UV stabiliser.

6. The combination according to any of claims 1 to 5, **characterised in that** the concentration of phenothrin is 9-11 wt% and the concentration of prallethrin is 0.9-1.1 wt%.

7. The combination according to any of claims 1 to 5, **characterised in that** the concentration of phenothrin is 0.09-0.11 wt% and the concentration of prallethrin is 0.009-0.011 wt%.

8. A non therapeutic use of the combination according to claim 7 as an insecticide.

9. The non therapeutic use of the insecticide according to claim 8 in a concentration of 20 ml/m² to 60 ml/m² on non porous surfaces.

10. The non therapeutic use of the insecticide according to claim 8 in a concentration of 40 ml/m² to 120 ml/m² on porous surfaces.

## Revendications

1. Combinaison de phénothrine encapsulée et de pralléthrine émulsifiée, dans de l'eau.

2. Combinaison selon la revendication 1, **caractérisée en ce que** le rapport massique entre la phénothrine et la pralléthrine est compris entre 5:1 et 20:1, préférentiellement égal à 10:1.

3. Combinaison selon les revendications 1 ou 2, **caractérisée en ce que** la phénothrine est microencapsulée.

4. Combinaison selon la revendication 3, **caractérisée en ce que** la taille de particules spécifique de la phénothrine est comprise entre 1,8 µm et 3,3 µm.

5. Combinaison selon l'une des revendications 1 à 4, **caractérisée en ce qu'**elle est co-formulée avec un stabilisant UV.

6. Combinaison selon l'une des revendications 1 à 5, **caractérisée en ce que** la concentration en phénothrine est de 9 à 11 % en masse et la concentration en pralléthrine est de 0,9 à 1,1 % en masse.

7. Combinaison selon l'une des revendications 1 à 5, **caractérisée en ce que** la concentration en phénothrine est de 0,09 à 0,11 % en masse et la concentration en pralléthrine est de 0,009 à 0,011 % en masse.

8. Utilisation non-thérapeutique de la combinaison selon la revendication 7 en tant qu'insecticide.

9. Utilisation non-thérapeutique de l'insecticide selon la revendication 8 dans une concentration comprise entre 20 ml/m² et 60 ml/m² sur des surfaces non-poreuses.

10. Utilisation non-thérapeutique de l'insecticide selon la revendication 8 dans une concentration comprise entre 40 ml/m² et 120 ml/m² sur des surfaces poreuses.
